Europäisches Patentamt

European Patent Office

Office européen des brevets

(11) Publication number: **0 234 921**
**A2**

# (12) EUROPEAN PATENT APPLICATION

(21) Application number: **87301608.3**

(22) Date of filing: **24.02.87**

(51) Int. Cl.⁴: **A 23 K 3/00**

(30) Priority: **26.02.86 GB 8604760**

(43) Date of publication of application:
**02.09.87 Bulletin 87/36**

(84) Designated Contracting States:
**BE DE FR GB IT NL SE**

(71) Applicant: **DALLAS KEITH LIMITED**
**38 West Bar**
**Banbury Oxfordshire (GB)**

(72) Inventor: **Willett, Bernard Robert**
**75 Wesley Drive**
**Banbury Oxon OX16 9LT (GB)**

**Willett, Michael Robert**
**12 Banbury Lane King's Sutton**
**Banbury Oxon OX17 3RU (GB)**

(74) Representative: **Oliver, Roy Edward et al**
**POLLAK MERCER & TENCH High Holborn House 52-54**
**High Holborn**
**London WC1V 6RY (GB)**

(54) **Silage additives.**

(57) A silage additive comprising molasses and vinegar also includes at least one bacterial inoculant, preferably present in micro-encapsulated form. A very effective form of additive contains at least two types of bacterial inoculant and, also, at least one enzyme, such as invertase.

EP 0 234 921 A2

**Description**

SILAGE ADDITIVES

This invention relates to silage additives, namely compositions which are added to animal feedstuff materials in order to provide extra nutrients and induce fermentation leading to long-term conservation of fodder. The invention also relates to the formation of silage by methods involving use of the compositions of the invention.

It is a traditional and widespread practice to store vegetable materials in order to provide animal feedstuffs for later use. Ensilage processes consist essentially of the storage of feedstuffs under conditions which promote anaerobic fermentation, leading to the production of acids which have a preservative effect. Silage additives are usually compositions which are stable as such and which encourage the ensilage process in vegetable materials to which they are added. When properly formulated, such additives have the considerable advantage of providing the desired ingredients for fast and effective fermentation, without requiring complex mixing or measuring operations, or the storage and use of several different materials.

The product which we make under our Regd. Trademark "MOLSILE" is a silage additive comprising two main ingredients, namely molasses, which is a valuable energy source per se and produces lactic acid by fermentation, and cider apple vinegar, which is a valuable feed stuff ingredient and also reduces the viscosity of the molasses and makes the product easy to handle. Molasses has long been used as a silage additive, but it is difficult and messy to apply, because of its high viscosity.

It has now been discovered that stable compositions can be made, for use as silage additives, which enable the desired fermentative conservation processes to take place very quickly, after the compositions have been brought into contact with suitable material, and to proceed vigorously, so as to bring about a rapid reduction in pH.

According to the present invention, a silage additive is provided, which comprises a stable composition containing molasses, vinegar and at least one bacterial inoculant. Preferably, the additive includes at least two types of bacterial inoculant, which are selected so as to encourage rapid fermentation in the desired way.

In accordance with a preferred feature of the invention, the composition contains one or both of Streptococcus faecium and Lactobacillus plantarum. The vinegar is preferably cider apple vinegar or some other form of vinegar made by using natural products, such as cider.

In accordance with another preferred feature of the invention, the composition includes at least one enzyme, which most preferably is invertase. This has been found to improve the action of the bacterial inoculants.

In a particularly preferred embodiment of the invention, therefore, a silage additive is provided, which comprises (1) molasses, advantageously in an amount of at least 60% and preferably 70% to 80% by weight of the total composition, (2) cider apple vinegar, (3) a bacterial inoculant component comprising Streptococcus faecium and Lactobacillus plantarum and (4) invertase. The bacterial component is advantageously present in such a concentration as to provide about $10^5$ organisms per gallon (i.e. about $2 \times 10^4$ organisms per litre) of the total composition.

When added to suitable vegetable material in a clamp or silo, the additives of the invention ensure the very rapid onset of fermentation, so as to lower the pH quickly by producing lactic acid, as this aids the fermentation process, preserves proteins and nutrients, reduces dry matter losses, maintains good palatability and reduces spoilage. The bacterial inoculant component also inhibits the growth of undesirable bacteria, while the sugar content required for optimum action by the bacteria is provided by the relatively high proportion of molasses. This also overcomes the problems posed by the relatively low sugar content of grass grown in the temperate climates such as Great Britain usually experiences. The invertase breaks down the complex sugars present in molasses, so that they are converted into compounds which are more readily available to the micro-organisms. In the preferred form of the additive with the two kinds of bacteria mentioned, the Streptococcus faecium rapidly produces anaerobic conditions after contact between the composition and the material being converted into silage, while the Lactobacillus plantarum continues the fermentation process and produces lactic acid in high yields with a consequent rapid pH reduction. The bacteria are preferably incorporated in the silage additive composition in a micro-encapsulated form, in order to ensure total stability of the composition during storage and transportation before it is put to use. It has been found that no significant reduction in bacteria takes place if the additive composition is stored throughout a silage-making season, so that the composition is just as effective whether used at the beginning or at the end of the season.

In addition to the advantages pointed out above, an additive composition of the invention contains molasses in an easily-handled free-flowing form, which aids ruminant digestion and encourages uptake because of its palatable and aromatic nature. Cider apple vinegar is commonly used in cattle feeds for many reasons and, in the additive compositions of the invention, provides a useful source of extra micro-nutrients. The composition can be applied by any of the customary techniques, preferably at the rate of about 5 to 10 litres per tonne (1 to 2 gallons per tonne).

**Claims**

1. A silage additive, for addition to animal feedstuff material in order to produce a preservative effect by ensilage, comprising a stable composition containing molasses and vinegar, characterised in that
at least one bacterial inoculant is included in the composition.

2. A silage additive according to claim 1, which contains at least two types of bacterial inoculant.

3. A silage additive according to claim 1 or 2, which contains one or both of Streptococcus faecium and Lactobacillus plantarum.

4. A silage additive according to any preceding claim, in which the bacterial inoculant is in a micro-encapsulated form.

5. A silage additive according to any preceding claim, in which the bacterial inoculant is present in such a concentration that the composition contains about $2 \times 10^4$ organisms per litre.

6. A silage additive according to any preceding claim, which includes at least one enzyme.

7. A silage additive according to claim 6, in which invertase is present.

8. A silage additive according to any preceding claim, in which the molasses comprises at least 60% by weight of the total composition.

9. A silage additive according to claim 8, in which the molasses comprises 70% to 80% by weight of the total composition.

10. A silage additive according to any preceding claim, in which the vinegar present is cider apple vinegar.

11. A method of manufacture of silage, which comprises adding a silage additive to an animal feedstuff material capable of undergoing anaerobic fermentation,
characterised in that
the silage additive is a stable composition as defined in any preceding claim.

12. A method according to claim 11, wherein the additive is applied to the feedstuff material at a rate in the range from 5 to 10 litres per tonne.